# EUROPEAN PATENT SPECIFICATION

(11) **EP 3 270 439 B1**
(45) Date of publication and mention of the grant of the patent: **10.04.2019**
(21) Application number: 17179703.8
(22) Date of filing: 05.07.2017
(51) Int. Cl.: H01M 2/10

(54) **BATTERY MODULE**
BATTERIEMODUL
MODULE DE BATTERIE

(30) Priority: 13.07.2016 CN 201620735215 U
(43) Date of publication of application: 17.01.2018
(73) Proprietor: Contemporary Amperex Technology Co., Limited, Jiaocheng District Ningde City Fujian 352100 (CN)
(72) Inventor: CHEN, Chuanlian, Ningde City, Fujian Province 352100 (CN); XIANG, Yanhuo, Ningde City, Fujian Province 352100 (CN); WANG, Derong, Ningde City, Fujian Province 352100 (CN); WU, Yuejian, Ningde City, Fujian Province 352100 (CN)
(74) Representative: Noréns Patentbyrå AB

(56) References cited:
- EP-A1- 2 819 210
- WO-A1-2016/084272
- US-A1- 2013 244 069

## Description

### TECHNICAL FIELD

The present application relates to the field of battery technologies and, particularly, relates to a battery module.

### BACKGROUND

Battery pack is a device that provides energy for the new energy vehicle, the development of battery pack technologies plays an important role in the development of the new energy vehicles. The battery pack includes a battery pack housing, a battery module, a battery management system and the like, of which the battery module is a major component of the battery pack.

The battery module commonly adopts a metal frame that includes a pair of end plates and a pair of side plates, the end plates and the side plates are connected with each other and envelop the battery units in the enclosed space thereof. In relevant art, the connection structure between the end plate and the side plate adopts a direct welding between the end surface of the end plate which represents the thickness of the end plate and the plate surface of the side plate, thus, when the battery units expand and deform along the thickness direction, the generated expansion force completely acts on the welding seam, which may result in that the metal frame is readily to lose efficacy at the welding seam.

An European patent document EP 2 819 210 A1 discloses a battery module comprising a plurality of battery cell stacked along a direction, a pair of end plates arranged spaced apart from each other in the direction at respective end faces of the stacked battery cells, and at least one bush member provided coupled to each end plate. In addition, the battery module also comprises a side plate provided on side surfaces of the stacked battery cells, the side plate includes a first fixing hole portion with a second hole provided to receive the fixing member extending through the bush member and provided to couple the side plate to the respective end plate. But in EP 2 819 210A1, the side plate is easy to be bent rigidly during the deformation process of the side plate, so as not to maintain good ability of elastic deformation.

Therefore, it is needed to provide an improved solution to solve the above defects.

### SUMMARY

The present application provides a battery module that can reduce the failure rate of the metal frame.

The present application provides a battery module which includes a base, a plurality of battery units, a pair of end plates, a pair of side plates and a plurality of sleeve members;
the plurality of battery units are located on the base, and are stacked along a thickness direction of the battery unit;
the pair of end plates are respectively located on two sides of the plurality of battery units in the thickness direction of the battery unit, and are adjacent to outermost battery units of the plurality of battery units; the pair of side plates are respectively located on two sides of the plurality of battery units in a width direction of the battery unit;
the sleeve member is connected with the end plate or the side plate, and extends toward the base and are fixed on the base;
the end plate comprises a first base plate and a first extending plate, the first base plate extends along the width direction of the battery unit, the first extending plate extends out from an end of the first base plate along the width direction of the battery unit;
the side plate comprises a second base plate and a second extending plate, the second base plate extends along the thickness direction of the battery unit, the second extending plate extends out from an end of the second base plate along the width direction of the battery unit;
the first extending plate and the second extending plate can be abutted with each other and fixedly connected at an abutting position.

Preferably, an abutting surface formed by the first extending plate and the second extending plate extends from a top end of the end plate to a bottom end of the end plate.

Preferably, the first base plate extends along the width direction of the battery unit, the first extending plate protrudes toward the battery unit with respect to the first base plate.

Preferably, the end plate is provided with a position limiting surface, when the first extending plate and the second extending plate are abutted and fixed, an end surface of the second extending plate far away from a side of the second base plate abuts against the position limiting surface.

The side plate further includes an arc-shaped transition plate, the second base plate and the second extending plate are transitionally connected through the arc-shaped transition plate.

Preferably, two ends of each end plate extending along the width direction of the battery unit are respectively provided with a sleeve member, and the sleeve member is located between the end plate and its adjacent battery unit.

Preferably, the battery module further includes a light-weight insulating end block, the light-weight insulating end block is filled in a space among the end plate, the battery unit adjacent to the end plate and the sleeve member located on two ends of the end plate.

Preferably, the sleeve member includes a pipe and a connecting piece that extend along a height direction of the battery unit; the connecting piece is inserted in the pipe, extends out of the pipe toward the base, and is fixed on the base.

Preferably, the pipe is formed into an integral structure with the end plate or the side plate.

Preferably, an end of the side plate adjacent to the base is bent toward the plurality of battery units and extends and forms a side plate flanging, and the side plate flanging contacts with a bottom surface of the plurality of battery units.

The technical solutions provided by the present application can achieve the following beneficial effect:

In the battery module provided by the present application, the end plate includes a first base plate and first extending plates, the first extending plate extends out from an end of the first base plate along the width direction of the battery unit; the side plate includes a second base plate and second extending plates, the second base plate extends along the thickness direction of the battery unit, the second extending plate extends out from an end of the second base plate along the width direction of the battery unit, and the first extending plate and the second extending plate can be abutted with each other and fixedly connected at the abutting position. Thus, when the battery units exert expansion force on the metal frame, the connecting portions of the end plates and the side plates only bear a part of the expansion force, and the rest part of the expansion force is canceled out through the deformation of the side plates. Therefore, the technical solution can improve the connecting strength of the end plate and the side plate, so as to reduce the failure of the metal frame.

It should be noted that, the general description above and the following detailed description are merely exemplary, which cannot limit the present application.

### BRIEF DESCRIPTION OF DRAWINGS

FIG. 1 is an exploded perspective view of a battery module according to Embodiment 1 of the present application;
FIG. 2 is a schematic view of a connection between an end plate and an side plate according to an embodiment of the present application;
FIG. 3 is a perspective view of an end plate according to an embodiment of the present application; and
FIG. 4 is an exploded perspective view of another battery module (not part of the invention);

### Reference signs:

10-battery unit;
20-end plate;
   201 -first base plate;
   202-first extending plate;
   203-reinforcing rib;
   204- position limiting surface;
30-side plate;
   301-second base plate;
   302-second extending plate;
   303-arc-shaped transition plate;
   304-end surface;
   305-side plate flanging;
40-sleeve member;
   401-pipe;
   402-connecting piece;
50-light-weight insulating end block.

The accompanying drawings herein are incorporated in the description and constitute a part of the description which shows the embodiments of the present application, and are used to explain the principles of the present application together with the description.

### DESCRIPTION OF EMBODIMENTS

The present application is described in further detail by the following specific embodiments with reference to the accompanying drawings.

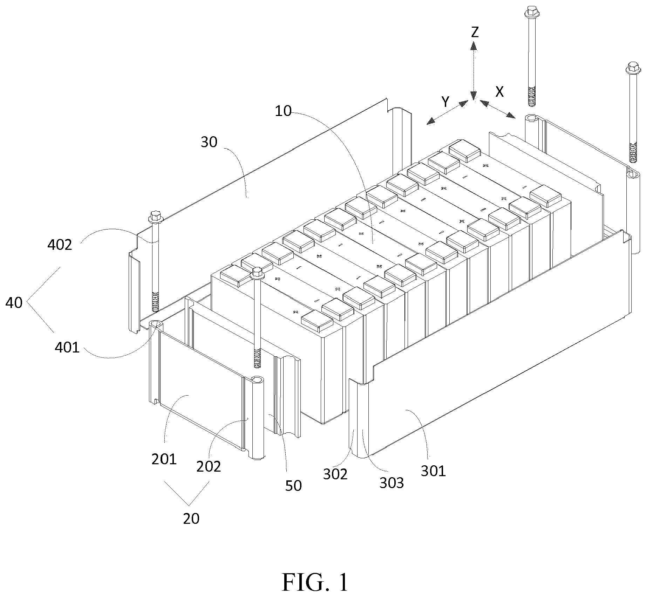

The present application provides a battery module, as shown in FIG. 1, including a base (located at the bottom of the battery units 10, not shown in FIG. 1), a plurality of battery units 10, a pair of end plates 20, a pair of side plates 30 and a plurality of sleeve members 40.

According to the serial-parallel connection requirements of the battery module, the plurality of battery units 10 are located on the base and are stacked along the thickness direction (X direction in FIG. 1) of the battery unit 10 with width surfaces thereof being closely abutted with each other; the pair of end plates 20 are respectively located on the two sides of the plurality of battery units 10 in the thickness direction, and are adjacent to the outermost battery units 10 of the plurality of battery units 10; the pair of side plates 30 are respectively located on the two sides of the plurality of battery units 10 in the width direction (Y direction in FIG. 1); the sleeve member 40 is connected with the end plate 20, extends toward the base, and are fixedly connected with the base. It shall be noted that, the sleeve member 40 is not limited to be connected with the end plate 20, which can also be connected with the side plate 30.

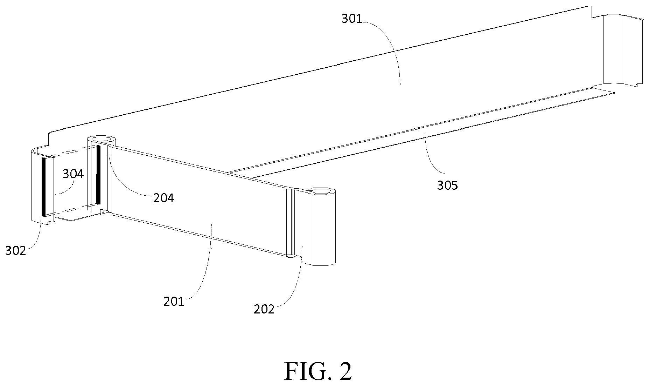

As shown in FIG. 2, the end plate 20 includes a first base plate 201 and a first extending plate 202, the first base plate 201 extends along the width direction of the battery unit 10, the first extending plate 202 extends out from an end of the first base plate 201 along the width direction of the battery unit 10; the side plate 30 includes a second base plate 301 and a second extending plate 302, the second base plate 301 extends along the thickness direction of the battery unit 10, the second extending plate 302 extends out from an end of the second base plate 301 along the width direction of the battery unit 10; and the first extending plate 202 and the second extending plate 302 can be abutted with each other in the width direction of the battery unit 10, and are fixedly connected at the abutting position.

The base, the end plate 20, the side plate 30 and the sleeve member 40 surround the plurality of battery units 10 and form a metal frame of the battery module. When the battery unit 10 exerts expansion force on the metal frame, except that the connecting positions of the end plate 20 and the side plate 30 can bear a part of the expansion force, the another part of the expansion force can also be counteracted through the deformation of the side plate 30, therefore, the connecting manner between the above-mentioned end plate 20 and side plate 30 can reduce the failure of the metal frame.

It can be known that, the first extending plate 202 and the second extending plate 302 can be connected and fixed by bolting, riveting or the like. In the present embodiment, the first extending plate 202 and the second extending plate 302 are preferably connected by laser welding and form a welding seam at the connecting position. The laser welding can guarantee sufficient connection strength there-between, and can effectively prevent from deformation resulted from uneven bearing of force.

Further preferably, in order to increase the length of the welding seam, thereby further improving the firmness of the connection, the abutting surface of the first extending plate 202 and the second extending plate 302 extends from the top end of the end plate 20 to the bottom end of the end plate 20. Such solution can provide the first extending plate 202 and the second extending plate 302 with a maximum connecting length on the end plate 20 in the height direction (Z direction in FIG. 1) of the battery unit 10, so as to be able to bear a larger part of the expansion force.

Moreover, in order to provide better abutting between the first extending plate 202 and the second extending plate 302, preferably, the first extending plate 202 protrudes from a side toward the battery units 10 with respect to the first base plate 201. Thus, the first extending plate 202 is not coplanar with the first base plate 201, and the flatness of a relative small plane can be more readily guaranteed compared with a large plane. Therefore, the first extending plate 202 with a relative small area can be more readily machined to possess flatness with a higher tolerance level, so as to reduce the defects of not being able to be welded or relative poor quality after welding due to that the first extending plate 202 and the second extending plate 302 cannot be closely abutted.

On the other hand, when the metal frame is connected and fastened, a precise relative position between the end plate 20 and the side plate 30 should also be guaranteed, so that the end plate 20 and the side plate 30 after welding can effectively serve as a metal frame and play their roles of a firm connection. In order to achieve this object, in the present embodiment, a position limiting surface 204 is preferably provided on the end plate 20, when the first extending plate 202 and the second extending plate 302 are abutted, the end surface 304 of the second extending plate 302 far away from the second base plate 301 abuts against the position limiting surface 204. With this arrangement, the position deviation between the end plate 20 and the side plate 30 can be effectively corrected, so that the end plate 20 and the side plate 30 after welding can possess better stability and reliability.

There are a plurality of forming manners of the position limiting surface 204. For example, a position limiting plate can be welded on the end plate 20, and the surface of the position limiting plate is used as the position limiting surface 204. In the present embodiment, the first extending plate 202 protrudes from a side toward the battery units 10 with respect to the first base plate 201 through a stamping process, and forms a connecting wall after the stamping process is finished, with the position limiting surface 204 formed on the surface of the connecting wall. This solution is implemented by using the existing features of the end plate 20 and the side plate 30, and no additional configuration is needed.

In view of the above, the battery unit 10 generates expansion force due to expansion and deformation, a part of the expansion force can be counteracted by the side plate 30, and the counteracting process of the expansion force is actually a process of elastic deformation of the side plate 30, that is, the side plate 30 absorbs energy through its own elastic deformation. In order to prevent the side plate 30 from fracture or failure during the repeated deformation, in the present application, the side plate 30 further includes an arc-shaped transition plate 303, and the second base plate 301 and the second extending plate 302 are transitionally connected through the arc-shaped transition plate 303. The arc-shaped transition plate 303 has good flexibility, which will not be bent rigidly during the deformation process of the side plate 30, so that the side plate 30 can maintain good ability of elastic deformation, and can well recover after the deformation.

The sleeve member 40 is configured to firmly connect the end plate 20 and the side plate 30 on the base, in order to achieve firm connection of all the four corners of the end plate 20 and the side plate 30 with the base, each corner of the end plate 20 and the side plate 30 where the ends thereof are connected should be respectively provided with at least one sleeve member 40. In the present embodiment, preferably, the two ends of each end plate 20 extending in the width direction of the battery unit 10 are respectively provided with a sleeve member 40, and the sleeve member is located between the end plate 20 and the battery unit 10 adjacent to the end plate 20. Thus, because of the connection between the end plate 20 and the side plate 30, the two ends of the side plate are also indirectly fixed through the sleeve member 40, so as to guarantee even bearing force on the two ends of the end plate 20 and even bearing force on the two ends of the side plate 30.

In order to improve the packaging ability of the metal frame to the battery unit 10, and strengthen the fastening effect of the end plate 20 to the battery unit 10, the gap between the end plate 20 and the battery unit 10 must be eliminated; the battery module provided by the present application further includes a light-weight insulating end block 50, the light-weight insulating end block 50 is filled in the space among the end plate 20, the battery unit 10 adjacent to the end plate 20 and the sleeve members 40 located at the two ends of the end plate 20, and the light-weight insulating end block 50 is fitted with the shape of the space.

In an ordinary battery module, a metal frame with an integral structure is usually adopted, e.g. aluminum alloy metal end plate, which has large weight and is adverse to improving the energy density of the battery module. The present application adopts the light-weight insulating end block 50 which, on one hand, plays a role in transmitting the force exerted on the battery unit 10 by the end plate 20, so as to increase the structure strength of battery module; on the other hand, the light-weight insulating end block 50 is made of an insulating material, which insulates the electrical connection between the metal frame and the battery unit 10, so as to guarantee sufficient insulation and light weight. Alternatively, the light-weight insulating end block 50 can adopt resin, plastics and the like.

As shown in FIG. 2, a side plate flanging 305 is arranged on the end of the side plate 30 in the height direction of the battery unit 10 and adjacent to the base, the side plate flanging 305 extends along the width direction of the battery unit 10 toward the plurality of battery units 10, and contacts with the bottom surface of the battery units 10. The side plate flanging 305 can improve the rigidity of the side plate 30, meanwhile plays as role in supporting the battery units 10 and improving the structure strength of the battery module.

As shown in FIG. 1, the sleeve member 40 includes a pipe 401 and a connecting piece 402 that extend along the height direction of the battery unit 10, the pipe 401 extends from the top end of end plate 20 to the bottom end of the end plate 20, the connecting piece 401 is inserted in the pipe 401 and extends toward the base and protrudes out of the pipe 401, and is connected and fixed with the base.

The pipe 401 can be an independent pipe structure, for example square pipe, circular pipe, etc. In the present embodiment, the pipe 401 and the end plate 20 preferably form an integral structure, the pipe 401 is formed by curling of the outermost end of the end plate 20 along the width direction of the battery, and the pipe 401 is connected with the first extending plate 202. This solution does not need the connection between the end plate 20 and the sleeve member 40, which has a simple structure and simplifies the installation procedure.

The connecting piece 402 can be a bolt, and the connecting piece 402 is inserted in the pipe 401, and is connected and fixed with the base through threads thereof extending toward the base and protruding out of the pipe 401.

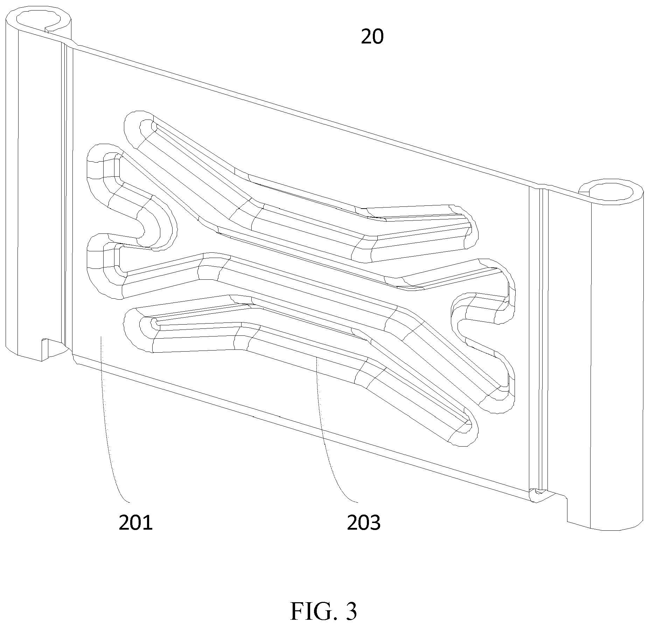

Additionally, in order to improve the ability of resisting bending deformation of the end plate 20, the end plate 20 further includes a reinforcing rib 203, as shown in FIG. 3, the reinforcing rib 203 is arranged on the first base plate 201. The reinforcing rib 203 can be formed by stamping, during which the simple molded surface of the end plate 20 can be machined to a complex molded surface of a concave-convex structure, so as to improve the bending strength. Certainly, the object of strengthening the end plate 30 can also be achieved by welding a strengthening plate on the first base plate 201.

The end plate 20 and the side plate 30 of the present application can adopt the same material, e.g. aluminum or steel, so as to facilitate the laser welding with each other.

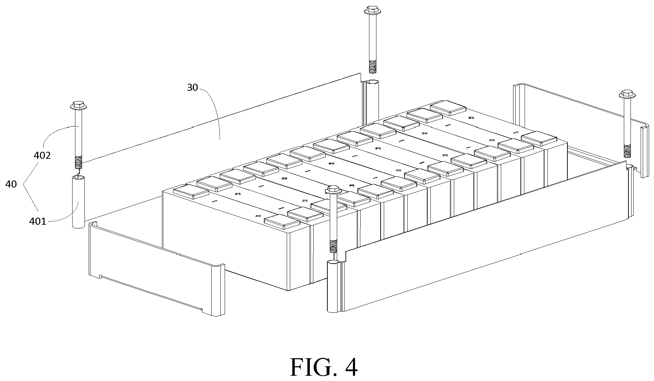

According to another example of the battery module, as shown in FIG. 4, the pipe 401 and the side plate 30 can also adopt an integral structure, where the pipe 401 is formed by curling of the two ends of the side plate 30 along the thickness direction of the battery, and is connected with the second extending plate 302. Similarly, the integral structure of the pipe 401 and the side plate 30 simplifies the connecting structure of the battery module, and improves the installation efficiency.

## Claims

1. A battery module comprising a base, a plurality of battery units (10), a pair of end plates (20), a pair of side plates (30) and a plurality of sleeve members (40);
the plurality of battery units (10) are located on the base, and are stacked along a thickness direction of the battery unit (10);
the pair of end plates (30) are respectively located on two sides of the plurality of battery units (10) in the thickness direction of the battery unit (10), and are adjacent to outermost battery units of the plurality of battery units (10); the pair of side plates (30) are respectively located on two sides of the plurality of battery units (10) in a width direction of the battery unit (10);
the sleeve member (40) is connected with the end plate (20) or the side plate (30), and extends toward the base and is fixed on the base; the end plate (20) comprises a first base plate (201) and a first extending plate (202), the first base plate (201) extends along the width direction of the battery unit (10), the first extending plate (202) extends out from an end of the first base plate (201) along the width direction of the battery unit (10);
the side plate (30) comprises a second base plate (301) and a second extending plate (302), the second base plate (301) extends along the thickness direction of the battery unit (10), and the second extending plate (302) extends out from an end of the second base plate (301) along the width direction of the battery unit (10);
the first extending plate (202) and the second extending plate (302) can be abutted with each other and fixedly connected at an abutting position, said battery module is **characterized in that** the side plate (30) further comprises an arc-shaped transition plate (303), and the second base plate (301) and the second extending plate (302) are transitionally connected through the arc-shaped transition plate (303).

2. The battery module according to claim 1, **characterized in that**, an abutting surface formed by the first extending plate (202) and the second extending plate (302) extends from a top end of the end plate (20) to a bottom end of the end plate (20).

3. The battery module according to claim 1, **characterized in that**, the first extending plate (202) protrudes toward the battery unit (10) with respect to the first base plate (201).

4. The battery module according to any one of claims 1-3, **characterized in that**, the end plate (20) is provided with a position limiting surface (204), when the first extending plate (202) and the second extending plate (302) are abutted and fixed, an end surface of the second extending plate (302) abuts against the position limiting surface (204).

5. The battery module according to any one of claims 1-3, **characterized in that**, two ends of each end plate (20) extending along the width direction of the battery unit (10) are respectively provided with a sleeve member (40), and the sleeve member (40) is located between the end plate (20) and its adjacent battery unit (10).

6. The battery module according to claim 5, **characterized in that**, the battery module further comprises a light-weight insulating end block (50), the light-weight insulating end block (50) is filled in a space among the end plate (20), the battery unit (10) adjacent to the end plate (20) and the sleeve members (40) located on two ends of the end plate (20).

7. The battery module according to any one of claims 1-3, **characterized in that**, the sleeve member (40) comprises a pipe (401) and a connecting piece (402) that extend along a height direction of the battery unit (10); the connecting piece (402) is inserted in the pipe (401), extends out of the pipe (401) toward the base, and is fixed on the base.

8. The battery module according to claim 7, **characterized in that**, the pipe (401) is integrated with the end plate (20) or the side plate (30).

9. The battery module according to any one of claims 1-3, **characterized in that**, an end of the side plate (30) adjacent to the base is bent toward the plurality of battery units (10) and extends and forms a side plate flanging (305), and the side plate flanging (305) contacts with a bottom surface of the plurality of battery units (10).

## Patentansprüche

1. Ein Batteriemodul umfassend eine Basis, eine Vielzahl von Batterieeinheiten (10), ein Paar Endplatten (20), ein Paar Seitenplatten (30) und eine Vielzahl von Hülsen (40);
die Vielzahl von Batterieeinheiten (10) ist auf der Basis angeordnet und entlang einer Dickenrichtung der Batterieeinheit (10) gestapelt;
das Paar Endplatten (30) ist jeweils an beiden Seiten der Vielzahl von Batterieeinheiten (10) in Dickenrichtung der Batterieeinheit (10) angebracht und grenzt an den äußeren Batterieeinheiten der Vielzahl von Batterieeinheiten (10) an; das Paar Seitenplatten (30) ist jeweils an zwei Seiten der Vielzahl von Batterieeinheiten (10) in einer Weitenrichtung der Batterieeinheit (10) angebracht;
die Hülse (40) ist mit der Endplatte (20) oder der Seitenplatte (30) verbunden und erstreckt sich in Richtung der Basis und ist an der Basis befestigt;
die Endplatte (20) umfasst eine erste Basisplatte (201) und eine erste sich erstreckende Platte (202), die erste Basisplatte (201) erstreckt sich entlang der Weitenrichtung der Batterieeinheit (10), die erste sich erstreckende Platte (202) erstreckt sich aus einem Ende der ersten Basisplatte (201) entlang der Weitenrichtung der Batterieeinheit (10);
die Seitenplatte (30) umfasst eine zweite Basisplatte (301) und eine zweite sich erstreckende Platte (302), die zweite Basisplatte (301) erstreckt sich entlang der Dickenrichtung der Batterieeinheit (10), und die zweite sich erstreckende Platte (302) erstreckt sich aus einem Ende der zweiten Basisplatte (301) entlang der Weitenrichtung der Batterieeinheit (10);
die erste sich erstreckende Platte (202) und die zweite sich erstreckende Platte (302) können aneinander angrenzen und an einer Anschlagsposition fest verbunden werden,
das genannte Batteriemodul ist **dadurch gekennzeichnet, dass** die Seitenplatte (30) weiterhin eine bogenförmige Übergangsplatte (303) umfasst, und die zweite Basisplatte (301) und die zweite sich erstreckende Platte (302) übergehend durch die bogenförmige Übergangsplatte (303) verbunden sind.

2. Das Batteriemodul nach Anspruch 1, **dadurch gekennzeichnet, dass** eine Anschlagsoberfläche, die durch die erste sich erstreckende Platte (202) und die zweite sich erstreckende Platte (302) gebildet wird, sich aus dem oberen Ende der Endplatte (20) bis zum unteren Ende der Endplatte (20) erstreckt.

3. Das Batteriemodul nach Anspruch 1, **dadurch gekennzeichnet, dass** die erste sich erstreckende Platte (202) in Richtung der Batterieeinheit hinsichtlich der ersten Basisplatte (201) herausragt.

4. Das Batteriemodul nach einem der Ansprüche 1-3, **dadurch gekennzeichnet, dass** die Endplatte (20) mit einer positionseinschränkenden Oberfläche (204) ausgestattet wird, wenn die erste sich erstreckende Platte (202) und die zweite sich erstreckende Platte (302) angrenzen und befestigt werden, eine Endoberfläche der zweiten sich erstreckenden Platte (302) grenzt an der positionslimitierenden Oberfläche (204) an.

5. Das Batteriemodul nach einem der Ansprüche 1-3, **dadurch gekennzeichnet, dass** zwei Enden jeder der Endplatten (20), die sich entlang der Weitenrichtung der Batterieeinheit (10) erstrecken, jeweils mit einer Hülse (40) ausgestattet sind und sich die Hülse (40) zwischen der Endplatte (20) und dessen angrenzenden Batterieeinheit (10) befindet.

6. Das Batteriemodul nach Anspruch 5, **dadurch gekennzeichnet, dass** das Batteriemodul weiter einen leichtgewichtigen, isolierenden Endblock (50) umfasst, der leichtgewichtige, isolierende Endblock (50) an einer Stelle zwischen der Endplatte (20), der Batterieeinheit (10), die an der Endplatte (20) angrenzt, und der Hülsen (40), die sich zwischen den beiden Enden der Endplatte (20) befinden, positioniert.

7. Das Batteriemodul nach einem der Ansprüche 1-3, **dadurch gekennzeichnet, dass** die Hülse (40) ein Rohr (401) und ein Verbindungsstück (402) umfasst, die sich entlang einer Höhenrichtung der Batterieeinheit (10) erstrecken; das Verbindungsstück (402) in das Rohr (401) gesteckt ist, sich aus dem Rohr (401) in Richtung Basis erstreckt und an der Basis befestigt ist.

8. Das Batteriemodul nach Anspruch 7, **dadurch gekennzeichnet, dass** das Rohr (401) mit der Endplatte (20) oder der Seitenplatte (30) integriert ist.

9. Das Batteriemodul nach einem der Ansprüche 1-3, **dadurch gekennzeichnet, dass** ein Ende der Seitenplatte (30), das an der Basis angrenzt, in Richtung der Vielzahl von Batterieeinheiten (10) gebogen ist und einen Seitenplattenflansch (305) erstreckt und bildet, und der Seitenplattenflansch (305) eine untere Oberfläche der Vielzahl von Batterieeinheiten (10) berührt.

## Revendications

1. Module de batterie qui comprend une base, une pluralité d'unités de batterie (10), une paire de plaques d'extrémité (20), une paire de plaques latérales (30) et une pluralité de capots (40) ;
les unités de batterie (10) sont situées sur la base, et sont empilées dans une direction d'épaisseur de l'unité de batterie (10) ;
les deux plaques d'extrémité (30) sont respectivement situées des deux côtés de la pluralité d'unités de batterie (10) dans la direction d'épaisseur de l'unité de batterie (10), et sont adjacentes aux unités de batterie les plus extérieures de la pluralité d'unités de batterie (10) ; les deux plaques d'extrémité (30) sont respectivement situées sur deux côtés de la pluralité d'unités de batterie (10) dans la direction de largeur de l'unité de batterie (10) ;
le capot (40) est relié à la plaque d'extrémité (20) ou la plaque latérale (30), et s'étend vers la base et est fixé sur la base ;
la plaque d'extrémité (20) comprend une première plaque de base (201) et une première plaque en extension (202), la première plaque de base (201) s'étend dans la direction de largeur de l'unité de batterie (10), et la première plaque en extension (202) s'étend vers l'extérieur depuis une extrémité de la première plaque de base (201) dans la direction de largeur de l'unité de batterie (10) ;
la plaque latérale (30) comprend une seconde plaque de base (301) et une seconde plaque en extension (302), la seconde plaque de base (301) s'étend dans la direction d'épaisseur de l'unité de batterie (10), et la seconde plaque en extension (302) s'étend vers l'extérieur depuis une extrémité de la seconde plaque de base (301) dans la direction de largeur de l'unité de batterie (10) ;
la première plaque en extension (202) et la seconde plaque en extension (302) peuvent buter l'une contre l'autre et être reliées de manière fixe au niveau d'un point de butée,
ledit module de batterie étant **caractérisé en ce que** la plaque latérale (30) comprend en outre une plaque de transition en forme d'arc (303), et la seconde plaque de base (301) et la seconde plaque en extension (302) sont reliées de manière transitionnelle par le biais de la plaque de transition en forme d'arc (303).

2. Module de batterie selon la revendication 1, **caractérisé en ce qu'**une surface de butée formée par la première plaque en extension (202) et la seconde plaque en extension (302) s'étend d'une extrémité supérieure de la plaque d'extrémité (20) vers une extrémité inférieure de la plaque d'extrémité (20).

3. Module de batterie selon la revendication 1, **caractérisé en ce que** la première plaque en extension (202) sort vers l'unité de batterie (10) par rapport à la première plaque de base (201).

4. Module de batterie selon l'une quelconque des revendications 1 à 3, **caractérisé en ce que** la plaque d'extrémité (20) est munie d'une surface de limitation de position (204), lorsque la première plaque en extension (202) et la seconde plaque en extension (302) sont en butée et fixes, une surface d'extrémité de la seconde plaque en extension (302) butant contre la surface de limitation de position (204).

5. Module de batterie selon l'une quelconque des revendications 1 à 3, **caractérisé en ce que** deux extrémités de chaque plaque d'extrémité (20) qui s'étend dans la direction de largeur de l'unité de batterie (10) sont respectivement munies d'un capot (40), et le capot (40) est situé entre la plaque d'extrémité (20) et son unité de batterie adjacente (10).

6. Module de batterie selon la revendication 5, **caractérisé en ce que** le module de batterie comprend en outre un bloc d'extrémité isolant et léger (50), le bloc d'extrémité isolant et léger (50) étant placé dans un espace parmi la plaque d'extrémité (20), l'unité de batterie (10) adjacente à la plaque d'extrémité (20) et les capots (40) situés sur les deux extrémités de la plaque d'extrémité (20).

7. Module de batterie selon l'une quelconque des revendications 1 à 3, **caractérisé en ce que** le capot (40) comprend un conduit (401) et un élément de raccordement (402) qui s'étendent dans une direction de hauteur de l'unité de batterie (10) ; l'élément de raccordement (402) est inséré dans le conduit (401), s'étend en-dehors du conduit (401) vers la base, et est fixé sur la base.

8. Module de batterie selon la revendication 7, **caractérisé en ce que** le conduit (401) est intégré à la plaque d'extrémité (20) ou à la plaque latérale (30).

9. Module de batterie selon l'une quelconque des revendications 1 à 3, **caractérisé en ce qu'**une extrémité de la plaque latérale (30) adjacente à la base est cintrée vers la pluralité d'unités de batterie (10) et s'étend et forme une bride de plaque latérale (305), et la bride de plaque latérale (305) est en contact avec une surface inférieure de la pluralité d'unités de batterie (10).
